# EUROPÄISCHE PATENTSCHRIFT

(11) **EP 3 459 779 B1**
(45) Veröffentlichungstag und Bekanntmachung des Hinweises auf die Patenterteilung: **07.04.2021**
(21) Anmeldenummer: 18194390.3
(22) Anmeldetag: 14.09.2018
(51) Int. Cl.: B60K 37/00, B60R 13/02

(54) **SCHALLDÄMPFUNGSTEIL, VERFAHREN ZUR HERSTELLUNG EINER SCHALLGEDÄMMTEN KAROSSERIE UND KRAFTFAHRZEUG**
SOUND DAMPING PART, METHOD FOR PRODUCING A SOUND DAMPENED BODY AND MOTOR VEHICLE
PARTIE D'ISOLATION SONORE, PROCÉDÉ DE FABRICATION D'UNE CARROSSERIE INSONORISÉE ET VÉHICULE AUTOMOBILE

(30) Priorität: 26.09.2017 DE 102017217083
(43) Veröffentlichungstag der Anmeldung: 27.03.2019
(73) Patentinhaber: VOLKSWAGEN AKTIENGESELLSCHAFT, 38440 Wolfsburg (DE)
(72) Erfinder: Weidner, Nadja, 38542 Leiferde (DE)

(56) Entgegenhaltungen:
- EP-A1- 1 262 358
- JP-A- 2001 151 041
- JP-U- H0 458 461
- KR-U- 19980 046 352
- US-B1- 6 186 887
- US-B1- 6 786 521

## Beschreibung

Die Erfindung betrifft ein Schalldämpfungsteil zur Anordnung in einem Kraftfahrzeug, ein Verfahren zur Herstellung einer schallgedämmten Karosserie, sowie ein Kraftfahrzeug, insbesondere einen Personenkraftwagen.

Zur Verminderung des in eine Kraftfahrzeug-Fahrgastzelle eindringenden Schalls ist es bekannt, schalldämmende Elemente an den die Fahrgastzelle begrenzenden Karosseriebauteilen anzuordnen. So werden etwa Bereiche von Karosserien mit schalldämmenden Schaumstoffteilen bedeckt, um in diesen Bereichen auftretende Schwingungen zu reduzieren und die Übertragung von Schall zu minimieren.

Weiterhin ist bekannt, in der Fahrzeugkarosserie vorhandene Öffnungen mit schalldämmenden Elementen zu verschließen. Dazu werden beispielsweise Schaumblöcke verwendet, die in die jeweiligen Öffnungen eingesteckt und gegebenenfalls in der jeweiligen Position am dem die Öffnung ausbildenden Material fixiert werden. Alternativ oder zusätzlich dazu können die vorhandenen Öffnungen abgeklebt werden, sodass auf diese Weise der Durchtritt von Schall verringert wird.

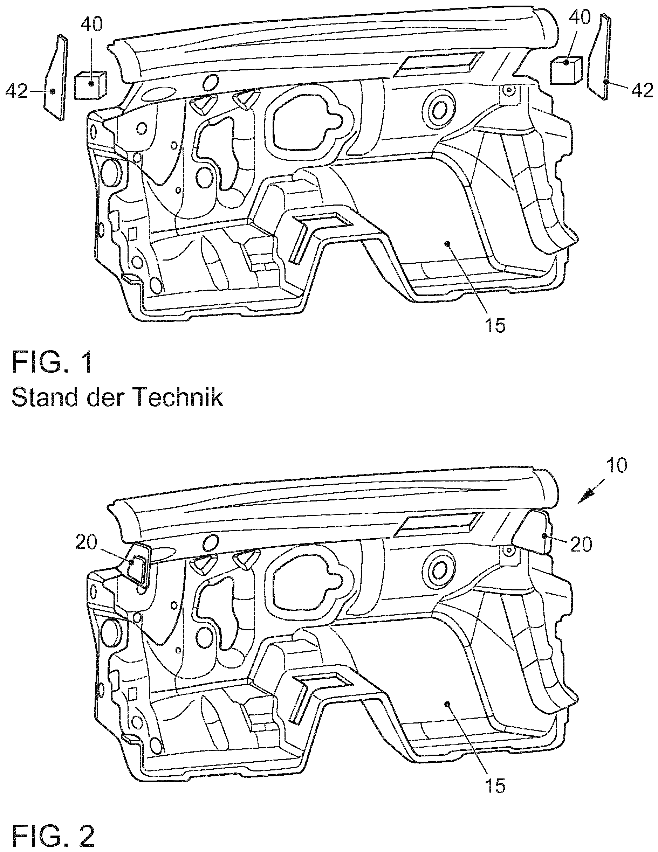

Einzelne Aspekte dieser aus dem Stand der Technik bekannten Lösung sind in der Figur 1 dargestellt. Diese zeigt ein Schalldämmelement 15, welches zur flächigen Anlage an die Stirnwand eines Kraftfahrzeugs ausgebildet ist. Es folgt der Kontur der hier nicht abgebildeten Stirnwand und kleidet diese auf ihrer der Fahrgastzelle zugewandten Seite aus. Das Schalldämmelement ist ein Schaumstoffelement, welches der akustischen Dämmung bzw. der Verminderung von Schallübertragung in die Fahrgastzelle dient.

In seitlichen Karosseriebauteilen angeordnete Löcher, die hier ebenfalls nicht dargestellt sind, werden mittels separater Schaumblöcke 40 verschlossen und auf diese Weise akustisch gedämmt. Die Schaumblöcke 40 sind schematisch dargestellt und werden typischerweise in die Öffnungen eingesteckt. Zusätzlich sind selbstklebende Vliesteile 50 angeordnet, die weiterer Isolierung bzw. dem Verschließen der Öffnungen dienen.

Es ist ersichtlich, dass die beschriebenen Lösungen einen großen Bauteilaufwand und, damit einhergehend, hohe Werkzeug-, Material-, Logistik-, sowie Montagekosten mit sich bringen.

Die DE 10 2006 031 396 beschreibt eine Cockpitanordnung in einem Kraftfahrzeug. Eine Stirnwand ist zwischen einem Motorraum in einem Fahrgastraum angeordnet und bildet eine Fläche aus. An der Innenseite der Stirnwand ist ein flächig anliegendes Schalldämmelement angeordnet. Im Fahrgastraum befindet sich ein Cockpitmodul. Der zwischen Stirnwand und Cockpitmodul befindliche Bereich des Schalldämmelements weist in Fahrzeugquerrichtung verlaufende Rippen auf, die am Cockpitmodul anliegen. Diese können je nach Abstand zwischen Stirnwand und Cockpitmodul zusammengedrückt werden und somit Fertigungstoleranzen ausgleichen.

Die EP 0 733 004 B1 offenbart einen schalldämpfenden Belag zum Auskleiden akustisch angeregter Flächen. Dieser weist eine oberseitige Deckschicht und eine deren Unterseite fest anhaftende schalldämmende Auskleidung auf, die zu einer gegenüberliegend angeordneten, akustisch angeregten Fläche, wie etwa einem Fahrzeugboden, bündig ist. Die Auskleidung ist dabei in mehrere Module unterteilt, die fest an der Unterseite der Deckschicht anhaften und jeweils bündig mit entsprechenden, gegenüberliegenden Teilflächen der akustisch angeregten Fläche zur Auflage bringbar sind.

Die JPH0458461U offenbart ein Schalldämpfungsteil mit den Merkmale des Oberbegriffs des Anspruchs 1.

Es ist die Aufgabe der Erfindung, ein Schalldämpfungsteil sowie ein Verfahren zur Herstellung einer schallgedämmten Karosserie zur Verfügung zu stellen, mit welchen auf besonders einfache und kostengünstige Weise eine Verminderung der Schallübertragung in eine Fahrgastzelle eines Kraftfahrzeugs realisierbar ist.

Die Aufgabe wird gelöst durch das Schalldämpfungsteil gemäß Anspruch 1 sowie durch das Verfahren zur Herstellung einer schallgedämmten Karosserie gemäß Anspruch 7.

Ausgestaltungen des Schalldämpfungsteils sind in den Unteransprüchen 2-6 angegeben, eine Ausgestaltung des Verfahrens ist in Unteranspruch 8 angegeben. Des Weiteren wird ein Kraftfahrzeug gemäß Anspruch 9 zur Verfügung gestellt.

Ein erster Aspekt der Erfindung ist ein Schalldämpfungsteil zur Anordnung in einem Kraftfahrzeug. Dieses umfasst ein Schalldämmelement, insbesondere ein Schaumstoffelement, zur im Wesentlichen flächigen Anlage an zumindest einen Bereich einer Kraftfahrzeug-Karosserie, insbesondere einer Stirnwand, zwecks Minderung von Schallübertragung in eine Fahrgastzelle. Weiterhin weist das Schalldämpfungsteil wenigstens ein mit dem Schalldämmelement verbundenes Pfropfenteil mit einem Pfropfen zum Einstecken in eine Öffnung eines Karosseriebauteils bzw. -bauteilverbunds zwecks Herstellung einer kraft- und/oder formschlüssigen Verbindung des Schalldämpfungsteils mit einem die Öffnung ausbildenden Material des Karosseriebauteils bzw. -bauteilverbunds auf. Insbesondere ist das Schalldämmelement flächig ausgebildet. Es ist zur im Wesentlichen flächigen Anlage an einen Bereich, typischerweise an ein Bauteil bzw. einen Bauteilverbund, einer Kraftfahrzeugkarosserie eingerichtet. Dieser Bereich ist insbesondere akustisch angeregt bzw. anregbar. Somit kann die Anlage des Schalldämmelements zur Minderung der Schallübertragung in eine Fahrgastzelle dienen. Insbesondere dient das Schalldämmelement der Dämpfung des durch den Bereich, das Bauteil und/oder dessen Öffnungen strahlenden Schalls und/oder der Dämpfung von Schall-erzeugenden Bewegungen, etwa Schwingungen, des Bauteils.

Typischerweise ist das Schalldämmelement zur Anlage an zumindest einen Bereich einer Stirnwand eingerichtet. Eine Stirnwand, auch als Spritzwand bezeichnet, ist insbesondere ein Motorraum und Fahrgastzelle eines Kraftfahrzeugs trennendes Bauteil. Diese verläuft quer im Fahrzeug.

Der Pfropfen ist dazu eingerichtet, entlang einer Einsteckrichtung in die Öffnung eingesteckt zu werden. Es können selbstverständlich auch mehrere Karosseriebauteile bzw. ein Karosseriebauteilverbund gemeinsam die Öffnung ausbilden, die dann zwischen den jeweiligen Bauteilen angeordnet ist. Der eingesteckte Pfropfen dient bei bestimmungsgemäßem Gebrauch der Verbindung des Schalldämpfungsteils mit einem die Öffnung aufweisenden Karosseriebauteil eines Kraftfahrzeugs.

Das Karosseriebauteil bzw. der Karosseriebauteilverbund, welches bzw. welcher die Öffnung ausbildet, kann dasjenige Karosseriebauteil sein oder umfassen, an welchem das Schalldämmelement zur Anlage bringbar ist, also beispielsweise die Stirnwand. Es kann auch ein anderes Bauteil sein. Insbesondere umfasst die Fahrzeugkarosserie im seitlichen Bereich mehrere Blechbauteile, welche gemeinsam die Öffnung ausbilden.

Insbesondere weist das Schalldämpfungsteil zwei Pfropfenteile auf. Diese sind bei bestimmungsgemäßem Gebrauch rechts und links am Schalldämpfungsteil angeordnet. Die an den jeweiligen Pfropfenteilen angeordneten Pfropfen können somit rechts und links an der Stirnwand des Kraftfahrzeugs angeordnet werden, um jeweilige Öffnungen zu verschließen.

In einer Ausgestaltung sind das Pfropfenteil und/oder der Pfropfen aus Schaumstoff hergestellt. Pfropfenteil und Pfropfen können einteilig hergestellt sein.

Die erfindungsgemäße Lösung weist den Vorteil auf, dass sie zur Schalldämmung der Stirnwand sowie zum Verschließen von Öffnungen nur ein einziges Bauteil benötigt, und auf diese Weise eine besonders einfache und kostengünstige Möglichkeit zur Verringerung der Schallübertragung in eine Fahrgastzelle zur Verfügung stellt. Der Montageaufwand ist wesentlich reduziert, da nach dem Anordnen des Schalldämmelements an der Stirnwand lediglich das Einstecken des bzw. der Pfropfen notwendig ist, um das erfindungsgemäße Schalldämmelement bestimmungsgemäß zu montieren.

Erfindungsgemäß ist die Ausgestaltung des Schalldämpfungsteils dadurch gekennzeichnet, dass das Schalldämmelement und das Pfropfenteil gelenkig miteinander verbunden sind.

Eine gelenkige Verbindung im Sinne der Erfindung ist eine Verbindung, welche eine relative Schwenkbewegung der verbundenen Teile um wenigstens 5°, insbesondere um wenigstens 20° und in einer Ausgestaltung beispielsweise um wenigstens 45° zueinander ermöglicht. Insbesondere ist die Gelenkachse durch einen biegbaren bzw. formbaren Materialbereich ausgebildet. Dafür wird ist insbesondere ein geeignetes flexibles Material genutzt. Auf diese Weise sind keine weiteren Bauteile zur Realisierung des Gelenks notwendig.

Diese Ausgestaltung weist den Vorteil auf, dass die Montage noch weiter vereinfacht wird, da nach der Anordnung des Schalldämmelements an dem Bereich der Kraftfahrzeug-Karosserie eine Relativbewegung zwischen dem Pfropfenteil, und somit dem Pfropfen, und dem Schalldämmelement realisierbar ist, welche gleichermaßen eine Relativbewegung zwischen dem Pfropfen und dem die Öffnung ausbildenden Material ist. Auf diese Weise kann der Pfropfen zwecks Einsteckens in die Öffnung relativ zu dieser geschwenkt werden.

Insbesondere sind bei bestimmungsgemäßem Gebrauch eine durch das Schalldämmelement im Bereich der Verbindung mit dem Pfropfenteil definierte erste Ebene und eine durch das Pfropfenteil definierte zweite Ebene in einem Winkel zwischen 30° und 150°, insbesondere zwischen 60° und 120° und beispielsweise in etwa 90° zueinander ausgerichtet. Mit anderen Worten stehen die Pfropfenteile in etwa rechtwinklig vom Schalldämmelement ab, sodass die jeweiligen Pfropfen zur Anordnung in Öffnungen eingerichtet sind, welche durch Bauteile ausgebildet sind, die im Wesentlichen entlang der Fahrzeuglängsrichtung ausgerichtet sind.

Eine weitere Ausgestaltung des Schalldämpfungsteils ist dadurch gekennzeichnet, dass der Pfropfen zur Ausbildung eines Hinterschnitts mit dem die Öffnung ausbildenden Material eingerichtet ist. Auf diese Weise ist eine formschlüssige Verbindung des Schalldämpfungsteils mit dem die Öffnung ausbildenden Material dergestalt herstellbar, dass der translatorische Freiheitsgrad des Pfropfens entgegen der Einsteckrichtung blockiert ist. Mit anderen Worten weist der Pfropfen einen ersten Bereich geringerer Abmessung, zum Beispiel eines geringeren Durchmessers, auf, auf welchen entlang der Einsteckrichtung ein zweiter Bereich mit zumindest entlang einer senkrecht zur Einsteckrichtung ausgerichteten Richtung größerer Abmessung folgt.

Der Pfropfen ist dabei typischerweise aus einem flexiblem Material hergestellt, welches zwecks Einsteckens in die Öffnung verformt werden kann und dann unter Ausbildung des Hinterschnitts wieder seine ursprüngliche Form annimmt. Mit anderen Worten wird der zweite Bereich beim Einstecken zusammengedrückt und durch die Öffnung gesteckt. Der Pfropfen wird weiter in die Öffnung eingesteckt, sodass der erste Bereich in der Öffnung angeordnet ist und der zweite Bereich sein Volumen wieder vergrößern kann und auf diese Weise den Hinterschnitt ausbildet. Die Öffnung ist dabei insbesondere ein Durchgangsloch. Alternativ kann die Öffnung einen sich auf beliebige Weise entlang der Einsteckrichtung erweiternden Querschnitt aufweisen.

Diese Ausgestaltung bringt den Vorteil mit sich, dass der Halt des Pfropfens im die Öffnung ausbildenden Material verbessert wird und das Schalldämpfungsteil auf diese Weise besonders schnell, einfach und fest an der Fahrzeug-Karosserie angeordnet werden kann.

In einer weiteren Ausgestaltung ist zumindest eine erste Ausdehnung des Pfropfens senkrecht zur Einsteckrichtung größer als eine zweite Ausdehnung des Pfropfens entlang der Einsteckrichtung. Auf diese Weise ist der Pfropfen zum Verschließen einer flächigen Öffnung eingerichtet.

Insbesondere weist eine flächige Öffnung quer zur Einsteckrichtung bzw. rechtwinklig zum die Öffnung ausbildenden Material einen Öffnungsbereich auf, welcher größer ist als die Dicke des die Öffnung ausbildenden Materials entlang der Einsteckrichtung. Insbesondere ist auch eine dritte Ausdehnung der Öffnung, die senkrecht zur ersten und zur zweiten Ausdehnung ausgerichtet ist, größer als die zweite Ausdehnung. Derartige Öffnungen sind aus unterschiedlichen Gründen an Karosseriebauteilen angeordnet, beispielsweise zwecks Gewichtseinsparung und/oder zur Ermöglichung des Abflusses von Tauchmedium bei der Tauchbehandlung des Karosserie-Bauteils. In dieser Ausgestaltung ist der Pfropfen somit zum Abdecken bzw. Verschließen derartiger Öffnungen in der Fahrzeug-Karosserie geeignet. Insbesondere ist der Pfropfen dabei exakt an die beliebig geformte Geometrie der Öffnung angepasst, sodass er sie unter Erzielung einer effizienten Schalldämmung verschließen kann. Diese Ausführungsform bringt den Vorteil mit sich, dass aus unterschiedlichen Zwecken in Fahrzeugkarosserien vorhandene Öffnungen einfach und kostengünstig verschlossen bzw. gegen den Durchtritt von Schall gedämmt werden können.

In einer weiteren Ausgestaltung ist die gegenüberliegende Seite der zur Anlage an den Bereich der Kraftfahrzeug-Karosserie eingerichteten Seite des Schalldämmelements und/oder die dem Pfropfen gegenüberliegende Seite des Pfropfenteils zumindest bereichsweise als Schwerschicht ausgebildet. Alternativ oder zusätzlich dazu ist an der gegenüberliegenden Seite der zur Anlage an den Bereich des Bauteils eingerichteten Seite des Schalldämmelements und/oder an der dem Pfropfen gegenüberliegenden Seite des Pfropfenteils zumindest bereichsweise eine Schwerschicht angeordnet.

Eine Schwerschicht ist eine Schicht aus einem vergleichsweise schweren Material, welche zur Verhinderung der Übertragung von Vibrationen bzw. der akustischen Dämmung akustisch angeregter Flächen genutzt wird. Die Schwerschicht weist typischerweise ein auf die Fläche bezogenes spezifisches Gewicht zwischen 1 kg/m² und 10 kg/m², insbesondere zwischen 2 kg/m² und 5 kg/m², auf.

Insbesondere wird die Schwerschicht, welche auch als Schwerfolie bezeichnet wird, federelastisch an das akustisch zu dämmende Bauteil angeschlossen und dient auf diese Weise als gegenschwingende Masse. Dies reduziert in der Summe die Schwingungen des akustisch zu dämmenden Bauteils und beruhigt dieses somit. Zur federelastischen Verbindung der Schwerschicht mit dem Bauteil wird insbesondere ein Schaumstoffteil genutzt, wie etwa das Pfropfenteil und/ oder das Schalldämmelement. Ein solches ist typischerweise dazu geeignet, dem Schwingungssystem Energie zu entziehen.

Typischerweise ist die Schwerschicht flächig ausgeführt und bedeckt das Schalldämmelement bzw. das Pfropfenteil im Wesentlichen vollständig. Dabei folgt sie insbesondere der entsprechenden Kontur des Schalldämmelements bzw. Pfropfenteils. An der dem Schalldämmelement bzw. dem Pfropfenteil abgewandten Seite der Schwerschicht können weitere Schichten angeordnet sein, wie etwa eine Vliesschicht.

Diese Ausgestaltung bringt den Vorteil mit sich, dass eine besonders weitgehende akustische Dämmung möglich ist und auf diese Weise der in die Fahrgastzelle eindringende Schall minimiert wird.

Eine Ausgestaltung des Schalldämpfungsteils ist dadurch gekennzeichnet, dass die gelenkige Verbindung mittels der Schwerschicht und/ oder mittels eines Schaumstoffteils realisiert ist.

Das Schaumstoffteil kann das Pfropfenteil, den Pfropfen und/oder das Schalldämmelement umfassen. In einer Ausgestaltung sind Schalldämmelement, Pfropfenteil und Pfropfen einstückig als Schaumstoffteil hergestellt. Dabei dienen die Bereiche des Schaumstoffteils, in welchen Pfropfenteil und Schalldämmelement miteinander verbunden sind, als Gelenk. In dieser Ausgestaltung können unterschiedliche Bereiche des Pfropfenteils und/oder des Schalldämmelements mit einer Schwerschicht bedeckt sein. Die Schwerschicht kann auch in demjenigen Bereich des Schaumstoffteils angeordnet sein, in welchen Pfropfenteil und Schalldämmelement miteinander verbunden sind. Somit kann das Gelenk zweilagig ausgebildet sein und die Schwerschicht und das Schaumstoffteil umfassen.

In einer anderen Ausgestaltung verbindet die Schwerschicht das Schalldämmelement und das Pfropfenteil miteinander. Mit anderen Worten stellt die Schwerschicht allein die gelenkige Verbindung zwischen dem Schalldämmelement und dem Pfropfenteil dar. An ihr sind an den jeweils unterschiedlichen Seiten des Gelenks das Schalldämmelement einerseits und das Pfropfenteil bzw. der Pfropfen andererseits angeordnet bzw. befestigt. Der entsprechende Bereich der Schwerschicht kann auch das Pfropfenteil ausbilden, wobei daran der insbesondere aus Schaumstoff hergestellte Pfropfen angeordnet ist.

Die genannten Ausgestaltungen bringen den Vorteil mit sich, dass das Gelenk durch vorhandene Bauteile ausgebildet wird und somit auf besonders einfache und kostengünstige Weise herstellbar ist.

In einer weiteren Ausgestaltung sind das Schalldämmelement und das Pfropfenteil, insbesondere umfassend den Pfropfen, einstückig hergestellt. Insbesondere sind sie als Schaumstoffteil hergestellt und entsprechend der geometrischen Ausgestaltungen der jeweiligen Bauteile geformt. Hier ergibt sich der Vorteil einer besonders einfachen und kostengünstigen Herstellung der Teile des erfindungsgemäßen Schalldämpfungsteils.

Ein zweiter Aspekt der Erfindung ist ein Verfahren zur Herstellung einer schallgedämmten Karosserie. Dabei werden ein erfindungsgemäßes Schalldämpfungsteil sowie zumindest ein Teil einer Kraftfahrzeug-Karosserie mit einem eine Öffnung ausbildenden Karosseriebauteil bzw. -bauteilverbund zur Verfügung gestellt. Der Pfropfen wird in die Öffnung eingesteckt, sodass eine kraft- und/oder formschlüssige Verbindung des Schalldämpfungsteils mit dem die Öffnung ausbildenden Material des Karosseriebauteils bzw. -bauteilverbunds hergestellt wird.

Insbesondere wird dabei mittels des Pfropfens ein Hinterschnitt mit dem die Öffnung ausbildenden Material realisiert, wobei sich das Pfropfenteil während des Einsteckens zeitweilig und zumindest im in der Öffnung befindlichen Bereich verformt und anschließend, nach Austritt des Bereichs aus der Öffnung, wieder im Wesentlichen seine ursprüngliche Form annimmt.

Mit dem erfindungsgemäßen Verfahren ist eine besonders einfache und schnelle Montage einer schallgedämmten Karosserie möglich. Es ist keine Anordnung separater Bauteile wie etwa von Schaumblöcken zum Verschließen bzw. akustischen Dämmen von in Karosseriebauteilen befindlichen Öffnungen notwendig.

Eine Ausgestaltung des Verfahrens ist dadurch gekennzeichnet, dass das Schalldämmelement des Schalldämpfungsteils im Wesentlichen flächig an zumindest einen Bereich der Kraftfahrzeug-Karosserie, nämlich an zumindest einen Bereich einer Stirnwand, zur Anlage gebracht wird. Dies erfolgt insbesondere vor dem Einstecken des Pfropfens. Insbesondere wird das Schalldämmelement auf geeignete Weise an dem Bereich fixiert.

Diese Ausgestaltung hat den Vorteil, dass die Positionierung des Schalldämpfungsteils gleichsam zur Positionierung des Pfropfenteils bzw. Pfropfens dient und somit die Montage weiter vereinfacht wird.

Ein weiterer Aspekt der Erfindung ist ein Kraftfahrzeug, insbesondere ein Personenkraftwagen. Dieses weist wenigstens ein erfindungsgemäßes Schalldämpfungsteil auf, wobei insbesondere das Pfropfenteil in eine Öffnung eines vom Kraftfahrzeug umfassten Karosseriebauteils bzw. -bauteilverbunds eingesteckt ist.

Typischerweise weist das Schalldämpfungsteil zwei Pfropfenteile mit jeweils einem Pfropfen auf, die in zwei Öffnungen von Karosseriebauteilen bzw. -bauteilverbunden eingesteckt sind.

Die Erfindung wird im Folgenden anhand der in den beiliegenden Zeichnungen dargestellten Ausführungsbeispiele erläutert.

Es zeigen
Fig. 1: eine perspektivische Ansicht eines aus dem Stand der Technik bekannten Systems zur Schalldämpfung,
Fig. 2: eine perspektivische Ansicht des erfindungsgemäßen Schalldämpfungsteils,
Fig. 3: eine perspektivische Detailansicht des Schalldämpfungsteils aus Figur 2,
Fig. 4: eine perspektivische Ansicht eines Bereichs einer erfindungsgemäßen schallgedämmten Karosserie,
Fig. 5: eine Schnittzeichnung A-A des Schalldämpfungsteils aus Figur 4, sowie
Fig. 6: eine Schnittzeichnung B-B des Schalldämpfungsteils aus Figur 4.

Auf die Figur 1 wurde bereits zur Erläuterung des Standes der Technik eingegangen.

Figur 2 zeigt das erfindungsgemäße Schalldämpfungsteil 10 in einem Kraftfahrzeug. Dargestellt ist eine Ansicht mit Blickrichtung in Wesentlichen entlang der Fahrtrichtung eines das Schalldämpfungsteil 10 aufweisenden Kraftfahrzeugs. Das Schalldämpfungsteil 10 umfasst ein Schalldämmelement 15 zur flächigen Anlage an einer Stirnwand eines Kraftfahrzeugs. Die hier nicht dargestellte Stirnwand ist in Bezug auf die Darstellung bei bestimmungsgemäßer Anordnung des Schalldämpfungsteils 10 hinter diesem angeordnet und trennt den dahinterliegenden Motorraum von der vor dem Schalldämmelement 15 befindlichen Fahrgastzelle ab. Mit anderen Worten begrenzt das Schalldämpfungsteil 10 die Fahrgastzelle nach vorn. Das Schalldämmelement 15 dient der Verringerung der Schallübertragung vom Motorraum in die Fahrgastzelle. Es ist aus Schaumstoff hergestellt und folgt im Wesentlichen der Kontur der Stirnwand.

Am Schalldämmelement 15 sind zwei Pfropfenteile 20 angeordnet. Diese sind in einem Winkel von etwa 90° in Bezug zum jeweilig benachbarten Bereich des Schalldämmelements 15 an diesem angeordnet und weisen entgegen der Fahrtrichtung des Kraftfahrzeugs.

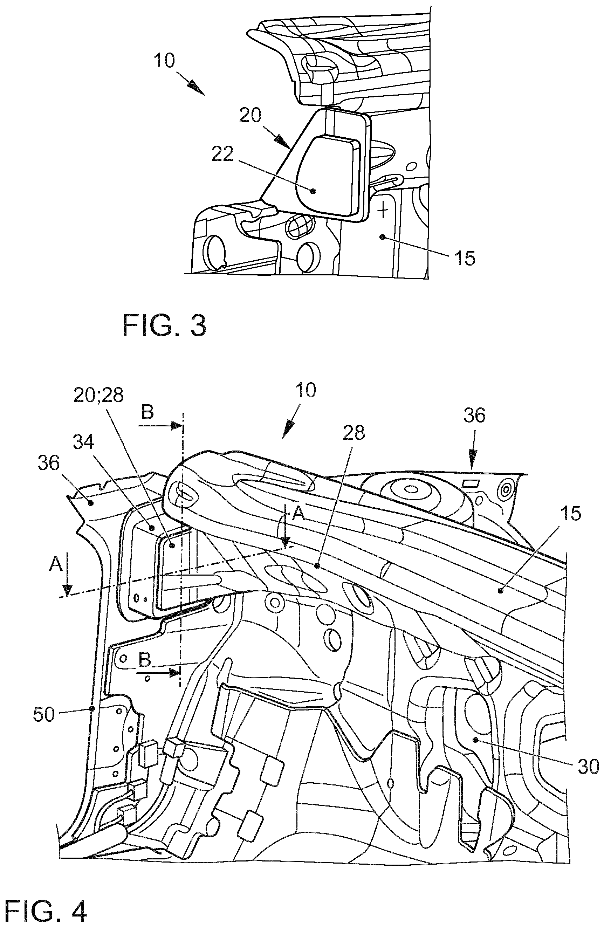

Eine detaillierte Ansicht des fahrerseitigen, linken, Pfropfenteils 20 ist in Figur 3 dargestellt. Dieses ist als ebenes, flächiges Element ausgeführt, an welchem ein Pfropfen 22 angeordnet ist. Pfropfenteil 20 und Pfropfen 22 sind einstückig mit dem Schalldämmelement 15 als Schaumstoffteil ausgeführt. Pfropfenteil 20 und Schalldämmelement 15 sind in einer diagonal verlaufenden Kante gelenkig miteinander verbunden. Das Gelenk wird dabei durch das gemeinsame Material, den Schaumstoff, realisiert.

Der Pfropfen 22 ist flächig ausgeführt und weist in Bezug zu seiner entlang der Einsteckrichtung gemessenen Tiefe jeweils eine große Höhe und Breite auf. Der Pfropfen 22 ist zum Einstecken in eine in der Fahrzeugkarosserie ausgebildete flächige Öffnung eingerichtet und dient dem Verschließen sowie dem akustischen Dämmen der Öffnung sowie der Fixierung des Schalldämpfungsteils 10 an dem die Öffnung ausbildenden Material.

Figur 4 zeigt einen Teil einer mittels des erfindungsgemäßen Verfahrens hergestellten schallgedämmten Karosserie. Dargestellt ist die Stirnwand 30, die in Richtung auf die Fahrgastzelle mit dem erfindungsgemäßen Schalldämpfungsteil 10 verkleidet ist. Das Schalldämpfungsteil 10 umfasst dabei, wie bereits dargestellt, das die Stirnwand 30 rückwärtig flächig abdeckende Schalldämmelement 15 sowie zwei seitlich daran gelenkig angeschlossene Pfropfenteile 20 mit jeweils einem Pfropfen.

Auf der linken Seite der Abbildung ist der Türrahmen 50 der Fahrertür dargestellt. Zwischen dem Türrahmen 50 und der Stirnwand 30 befinden sich Karosseriebauteile 34, die eine Öffnung ausbilden. Diese ist hier nicht dargestellt, da sie mittels des ebenfalls nicht bezeichneten Pfropfens verschlossen ist. Dargestellt ist lediglich die dem Pfropfen abgewandte Seite des Pfropfenteils 20. Diese ist ebenso wie das gesamte Schalldämmelement 15 mit einer Schwerschicht 28 bedeckt. Weitere Bauteile 36 der Kraftfahrzeug-Karosserie bilden den Türrahmen 50 sowie die seitliche Begrenzung des Motorraums aus.

Die Schwerschicht 28 bildet gemeinsam mit dem Schaumstoff, aus welchem Pfropfenteil 20, Pfropfen sowie Schalldämmelement 15 einstückig hergestellt sind, die gelenkige Verbindung zwischen dem Pfropfenteil 20 sowie dem Schalldämmelement 15 aus. Diese ist in der diagonalen Kante analog zum in Figur 3 Gezeigten ausgebildet.

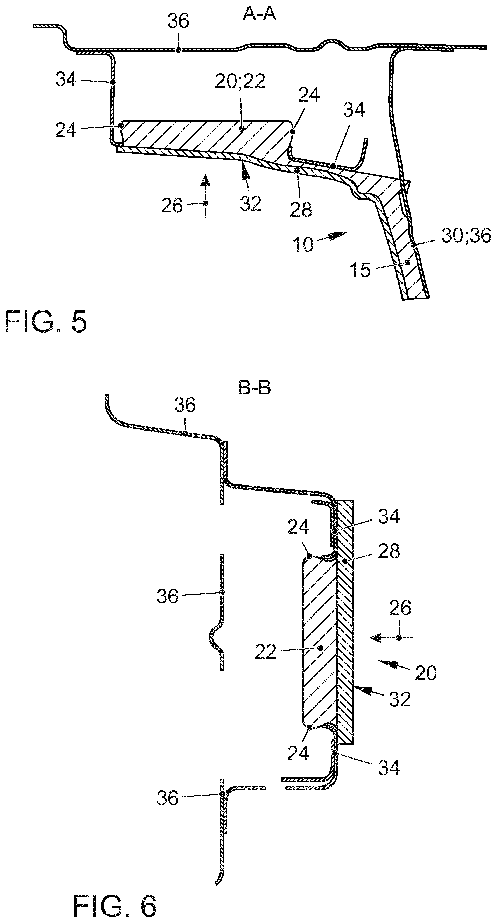

Figur 5 zeigt den Schnitt A-A, der in Figur 4 angedeutet ist. Es zeigt sich, dass die Karosseriebauteile 34 eine Öffnung 32 ausbilden, die von dem Pfropfen 22 verschlossen ist.

Der Pfropfen 22 ist ein Teil des Pfropfenteils 20, welches gemeinsam mit dem Schalldämmelement 15 das erfindungsgemäße Schalldämpfungsteil 10 ausbildet. Wie bereits beschrieben sind die erwähnten Elemente einstückig als Schaumstoffteil ausgebildet. Die Schwerschicht 28 ist flächig an der der Fahrgastzelle zugewandten Innenseite angeordnet. Sie bildet gemeinsam mit einem aus Schaumstoff gefertigten Bereich die gelenkige Verbindung zwischen Pfropfenteil 20 und Schalldämmelement 15 aus. Diese ist im rechts abgebildeten Bereich des Schaumstoffteils ausgebildet und bildet einen Winkel von etwa 65° zwischen den genannten Bauteilen aus. Das in der Abbildung darunter angeordnete Schalldämmelement 15 liegt an der Stirnwand 30, einem Bauteil 36 der Kraftfahrzeug-Karosserie, an.

Weiterhin ist ersichtlich, dass der Pfropfen 22 zur Ausbildung eines Hinterschnitts 24 mit dem die Öffnung 32 ausbildenden Material eingerichtet ist. Entlang der Einsteckrichtung 26 betrachtet weist der vordere Teil des Pfropfens 22 eine größere Breite auf als der hintere, im Bereich der Öffnung 32 befindliche Teil des Pfropfens 22. Auf diese Weise ist eine formschlüssige Verbindung des Pfropfens 22 und somit das Schalldämpfungsteils 10 mit dem die Öffnung 32 ausbildenden Material realisiert, in welchem der translatorische Freiheitsgrad des Pfropfens 22 entgegen der Einsteckrichtung 26 blockiert ist.

Der in Figur 6 dargestellte Schnitt B-B ist, wie aus Figur 4 ersichtlich, senkrecht zum in Figur 5 dargestellten Schnitt A-A ausgerichtet. Er zeigt wiederum die die Öffnung 32 ausbildende Kraftfahrzeug-Karosseriebauteile 34, weitere Bauteile 36 der Kraftfahrzeug-Karosserie, sowie den in der Öffnung 32 angeordneten Pfropfen 22 mitsamt dem zugehörigen Bereich des Pfropfenteils 20. Auch in dieser Richtung ist ein Hinterschnitt 24 ausgebildet. Somit erstreckt sich der durch die Öffnung 32 durchgesteckte Bereich des Pfropfens 22 auch nach oben bzw. unten weiter als der im Bereich der Öffnung 32 befindliche Teil des Pfropfens 22.

In dieser Darstellung ist ebenfalls ersichtlich, dass der Pfropfen 22 von der Schwerschicht 28 begrenzt wird. Im Bereich des die Öffnung 32 ausbildenden Materials der Karosseriebauteile 34, oberhalb bzw. unterhalb der Öffnung 32, ist hier kein Schaumstoffmaterial angeordnet. Diese Bereiche des Pfropfenteils 20 werden ausschließlich von der Schwerschicht 28 ausgebildet, welche in diesen Bereichen direkt an den entsprechenden Karosseriebauteilen 34 anliegt.

### Bezugszeichenliste

- 10: Schalldämpfungsteil
- 15: Schalldämmelement
- 20: Pfropfenteil
- 22: Pfropfen
- 24: Hinterschnitt
- 26: Einsteckrichtung
- 28: Schwerschicht
- 30: Stirnwand
- 32: Öffnung
- 34: Karosseriebauteil
- 36: Bauteil
- 40: Schaumblock
- 42: Vliesteil
- 50: Türrahmen

## Patentansprüche

1. Schalldämpfungsteil (10) zur Anordnung in einem Kraftfahrzeug, umfassend ein Schalldämmelement (15), insbesondere ein Schaumstoffelement, zur im Wesentlichen flächigen Anlage an zumindest einen Bereich einer Kraftfahrzeug-Karosserie, insbesondere einer Stirnwand (30), zwecks Minderung von Schallübertragung in eine Fahrgastzelle,
wobei das Schalldämpfungsteil (10) wenigstens ein mit dem Schalldämmelement (15) verbundenes Pfropfenteil (20) mit einem Pfropfen (22) zum Einstecken in eine Öffnung (32) eines Karosseriebauteils (34) bzw. -bauteilverbunds zwecks Herstellung einer kraft- und/oder formschlüssigen Verbindung des Schalldämpfungsteils (10) mit einem die Öffnung (32) ausbildenden Material des Karosseriebauteils (34) bzw. -bauteilverbunds aufweist, **dadurch gekennzeichnet, dass** das Schalldämmelement (15) und das Pfropfenteil (20) gelenkig miteinander verbunden sind.

2. Schalldämpfungsteil (10) nach dem vorhergehenden Anspruch, **dadurch gekennzeichnet, dass** der Pfropfen (22) zur Ausbildung eines Hinterschnitts (24) mit dem die Öffnung (32) ausbildenden Material eingerichtet ist, sodass eine formschlüssige Verbindung des Schalldämpfungsteils (10) mit dem die Öffnung (32) ausbildenden Material dergestalt herstellbar ist, dass der translatorische Freiheitsgrad des Pfropfens (22) entgegen der Einsteckrichtung (26) blockiert ist.

3. Schalldämpfungsteil (10) nach einem der vorhergehenden Ansprüche, **dadurch gekennzeichnet, dass** zumindest eine erste Ausdehnung des Pfropfens (22) senkrecht zur Einsteckrichtung (26) größer ist als eine zweite Ausdehnung des Pfropfens (22) entlang der Einsteckrichtung (26), sodass der Pfropfen (22) zum Verschließen einer flächigen Öffnung (32) eingerichtet ist.

4. Schalldämpfungsteil (10) nach einem der vorhergehenden Ansprüche, **dadurch gekennzeichnet, dass** die gegenüberliegende Seite der zur Anlage an den Bereich der Kraftfahrzeug-Karosserie eingerichtete Seite des Schalldämmelements (15) und/oder die dem Pfropfen (22) gegenüberliegende Seite des Pfropfenteils (20) zumindest bereichsweise als Schwerschicht (28) ausgebildet ist bzw. dass an der gegenüberliegenden Seite der zur Anlage an den Bereich der Kraftfahrzeug-Karosserie eingerichteten Seite des Schalldämmelements (15) und/oder an der dem Pfropfen (22) gegenüberliegenden Seite des Pfropfenteils (20) zumindest bereichsweise eine Schwerschicht (28) angeordnet ist.

5. Schalldämpfungsteil (10) nach Anspruch 4, **dadurch gekennzeichnet, dass** die Schwerschicht (28) das Schalldämmelement (15) und das Pfropfenteil (20) miteinander verbindet.

6. Schalldämpfungsteil (10) nach einem der vorhergehenden Ansprüche, **dadurch gekennzeichnet, dass** das Schalldämmelement (15) und das Pfropfenteil (20), insbesondere umfassend den Pfropfen (22), einstückig hergestellt sind.

7. Verfahren zur Herstellung einer schallgedämmten Karosserie, bei dem ein Schalldämpfungsteil (10) gemäß einem der Ansprüche 1-6 sowie zumindest ein Teil einer Kraftfahrzeug-Karosserie mit einem eine Öffnung (32) ausbildenden Karosseriebauteil (34) bzw. -bauteilverbund zur Verfügung gestellt werden, und wobei der Pfropfen (22) in die Öffnung (32) eingesteckt wird, sodass eine kraft- und/oder formschlüssige Verbindung des Schalldämpfungsteils (10) mit dem die Öffnung (32) ausbildenden Material des Karosseriebauteils (34) bzw. - bauteilverbunds hergestellt wird.

8. Verfahren zur Herstellung einer schallgedämmten Karosserie nach Anspruch 7, **dadurch gekennzeichnet, dass** das Schalldämmelement (15) des Schalldämpfungsteils (10), insbesondere vordem Einstecken des Pfropfens (22), im Wesentlichen flächig an zumindest einen Bereich der Kraftfahrzeug-Karosserie, nämlich an zumindest einen Bereich einer Stirnwand (30), zur Anlage gebracht wird.

9. Kraftfahrzeug, insbesondere Personenkraftwagen, **dadurch gekennzeichnet, dass** dieses wenigstens ein Schalldämpfungsteil (10) gemäß einem der Ansprüche 1-6 aufweist, wobei insbesondere das Pfropfenteil (20) in eine Öffnung (32) eines vom Kraftfahrzeug umfassten Karosseriebauteils (34) bzw. -bauteilverbunds eingesteckt ist.

## Claims

1. Sound damping part (10) for arrangement in a motor vehicle, comprising a sound damping element (15), in particular a foam element, for essentially flat contact with at least one region of a motor vehicle body, in particular an end wall (30), for the purpose of reducing sound transmission into a passenger compartment,
wherein the sound damping part (10) has at least one plug part (20) connected to the sound damping element (15) and having a plug (22) for insertion into an opening (32) of a body component (34) or body component composite for the purpose of producing a non-positive and/or positive connection of the sound damping part (10) to a material of the body component (34) or body component composite, said material forming the opening (32), **characterized in that** the sound damping element (15) and the plug part (20) are connected to one another in an articulated manner.

2. Sound damping part (10) according to the preceding claim, **characterized in that** the plug (22) is configured to form an undercut (24) with the material forming the opening (32), so that a positive connection of the sound damping part (10) to the material forming the opening (32) can be produced in such a manner that the translational degree of freedom of the plug (22) counter to the insertion direction (26) is blocked.

3. Sound damping part (10) according to any one of the preceding claims, **characterized in that** at least a first extension of the plug (22) perpendicular to the insertion direction (26) is greater than a second extension of the plug (22) along the insertion direction (26), such that the plug (22) is configured to seal a flat opening (32).

4. Sound damping part (10) according to one of the preceding claims, **characterized in that** the opposite side of the side of the sound damping element (15) that is configured for bearing against the region of the motor vehicle body, and/or the side of the plug part (20) that is opposite the plug (22), is designed at least in regions as a heavy-duty layer (28) or, respectively, **in that** a heavy-duty layer (28) is arranged at least in regions on the opposite side of the side of the sound damping element (15) that is configured for bearing against the region of the motor vehicle body and/or on the side of the plug part (20) that is opposite the plug (22).

5. Sound damping part (10) according to claim 4, **characterized in that** the heavy-duty layer (28) connects the sound damping part (15) and the plug part (20) to one another.

6. Sound damping part (10) according to one of the preceding claims, **characterized in that** the sound damping element (15) and the plug part (20), in particular comprising the plug (22), are manufactured in one piece.

7. Method for producing a sound dampened body in which a sound damping part (10) according to any one of the claims 1-6 and at least one part of a motor vehicle body comprising a body component (34) or component composite forming an opening (32) are provided, and wherein the plug (22) is inserted into the opening (32), such that a non-positive and/or positive connection of the sound damping part (10) to the material of the body component (34) or body component composite forming the opening (32) is produced.

8. Method for producing a sound dampened body according to claim 7, **characterized in that** the sound damping element (15) of the sound damping part (10), in particular before insertion of the plug (22), is brought to bear essentially flat against at least one region of the motor vehicle body, namely against at least one region of an end wall (30).

9. Motor vehicle, in particular a passenger car, **characterized in that** it has at least one sound damping part (10) according to one of the claims 1-6, wherein in particular the plug part (20) is inserted into an opening (32) of a body component (34) or body component composite comprised by the motor vehicle.

## Revendications

1. Partie d'isolation sonore (10) destinée à l'agencement dans un véhicule automobile, comprenant un élément d'isolation sonore (15), en particulier un élément en mousse, destiné à l'appui essentiellement à plat sur au moins une zone d'une carrosserie de véhicule automobile, en particulier une paroi d'extrémité (30), dans le but de réduire la transmission sonore dans un habitacle,
dans lequel la partie d'isolation sonore (10) comporte au moins une pièce tampon (20) reliée à l'élément d'isolation sonore (15) comportant un tampon (22) destiné à l'insertion dans une ouverture (32) d'un composant de carrosserie (34) ou d'un composite de composant de carrosserie dans le but de produire une force et/ou une liaison par complémentarité de forme de la partie d'isolation sonore (10) avec une matière du composant de carrosserie (34) ou du composite de composant de carrosserie formant l'ouverture (32), **caractérisée en ce que** l'élément d'isolation sonore (15) et la pièce tampon (20) sont reliés l'un à l'autre de manière articulée.

2. Partie d'isolation sonore (10) selon la revendication précédente, **caractérisée en ce que** le tampon (22) est conçu pour former une contre-dépouille (24) avec la matière formant l'ouverture (32) de telle sorte qu'une liaison par complémentarité de forme de la partie d'isolation sonore (10) avec la matière formant l'ouverture (32) peut être produite de telle sorte que le degré de liberté en translation du tampon (22) contre la direction d'insertion (26) est bloqué.

3. Partie d'isolation sonore (10) selon l'une quelconque des revendications précédentes, **caractérisée en ce qu'**au moins une première extension du tampon (22) perpendiculaire à la direction d'insertion (26) est supérieure à une seconde extension du tampon (22) le long de la direction d'insertion (26) de telle sorte que le tampon (22) est conçu pour fermer une ouverture (32) plate.

4. Partie d'isolation sonore (10) selon l'une quelconque des revendications précédentes, **caractérisée en ce que** le côté opposé du côté de l'élément d'isolation sonore (15) amené en appui contre la zone de la carrosserie du véhicule automobile et/ou le côté de la pièce tampon (20) opposé au tampon (22) est au moins partiellement conçu sous forme de couche lourde (28) ou qu'une couche lourde (28) est disposée, au moins par zones, du côté opposé du côté de l'élément d'isolation sonore (15) amené en appui contre la zone de la carrosserie du véhicule automobile et/ou du côté de la pièce tampon (20) opposée au tampon (22).

5. Partie d'isolation sonore (10) selon la revendication 4, **caractérisée en ce que** la couche lourde (28) relie l'élément d'isolation sonore (15) et la pièce tampon (20) l'un à l'autre.

6. Partie d'isolation sonore (10) selon l'une quelconque des revendications précédentes, **caractérisée en ce que** l'élément d'isolation sonore (15) et la pièce tampon (20), en particulier comprenant le tampon (22), sont fabriqués d'une seule pièce.

7. Procédé de fabrication d'une carrosserie insonorisée, dans lequel une pièce d'isolation sonore (10) selon l'une quelconque des revendications 1 à 6 ainsi qu'au moins une pièce d'une carrosserie de véhicule automobile comportant un composant de carrosserie (34) ou un composite de composant de carrosserie formant une ouverture (32) sont fournis, et dans lequel le tampon (22) est inséré dans l'ouverture (32) de telle sorte qu'une liaison par complémentarité de force et/ou de forme de la pièce d'isolation sonore (10) avec la matière du composant de carrosserie (34) ou du composite de composant de carrosserie formant l'ouverture (32) est produite.

8. Procédé de fabrication d'une carrosserie insonorisée selon la revendication 7, **caractérisé en ce que** l'élément d'isolation sonore (15) de la pièce d'isolation sonore (10), en particulier avant l'insertion du tampon (22), est amené en appui essentiellement à plat contre au moins une zone de la carrosserie du véhicule automobile, à savoir au moins une zone d'une paroi d'extrémité (30).

9. Véhicule automobile, en particulier véhicule personnel, **caractérisé en ce qu'**il comporte au moins une pièce d'isolation sonore (10) selon l'une quelconque des revendications 1 à 6, dans lequel, en particulier la pièce tampon (20) est insérée dans une ouverture (32) d'un composant de carrosserie (34) ou d'un composite de composant de carrosserie compris par le véhicule automobile.
